# EUROPEAN PATENT APPLICATION

(11) **EP 1 798 083 A2**
(43) Date of publication of application: **20.06.2007**
(21) Application number: 06126092.3
(22) Date of filing: 14.12.2006
(51) Int. Cl.: B60J 5/04

(54) **Door hardware module**

(30) Priority: 14.12.2005 US 750224 P
(71) Applicant: Dura Global Technologies, Inc., Rochester Hills, Michigan 48309 (US)
(72) Inventor: Dufour, William T., Macomb, MI 48042 (US); Dedrich, Paul M., Grand Blanc, MI 48439 (US); Miller, Adam, Royal Oak, MI 48067 (US)
(74) Representative: Gervasi, Gemma

(57) **Abstract**

A door module includes a door inner panel (20) including at least one fastening feature (40). A carrier plate (25) includes at least one fastener (45) attached thereon prior to attachment to the door inner panel (20). The fastener (45) couples with the at least one fastening feature (40) of the door inner panel for operatively connecting the door inner panel (20) and the carrier plate (25).

## Description

### RELATED APPLICATION

This application claims priority of United States Provisional Patent Application Serial No. 60/750,224 filed December 14, 2005, which is incorporated herein by reference.

### FIELD OF THE INVENTION

The invention relates to automotive door modules.

### BACKGROUND OF THE INVENTION

Doors for automotive vehicles typically include various components that are coupled to form the door. Doors may include an inner panel, various reinforcement members and an interior trim. Various components including latches, window regulators and other hardware may be attached to the doors. However, attaching all the components to the door requires a time consuming and complex operation, as well as occupies a large factory floor space.

To decrease the time and complexity of assembling the door, recent proposals have been made to construct some of the hardware as a subassembly or module. This subassembly can then be joined with the remainder of the door at any given place and time. Various entities have attempted to create such door modules, but there is a need in the art for improved door modules that can be easily assembled with a door to decrease the time and complexity of the assembly operation. There is also a need in the art for a door module that can be reliably positioned in a correct orientation with respect to the remainder of the door and trim. There is also a need in the art for a door module that has improved hardware for a window regulator. Additionally there is a need for a door module that has improved sealing, side impact and energy absorbing characteristics.

### SUMMARY OF THE INVENTION(S)

In a first aspect there is disclosed a door module that includes a door inner panel including at least one fastening feature. A carrier plate includes at least one fastener attached thereon prior to attachment to the door inner panel. The fastener couples with the at least one fastening feature of the door inner panel for operatively connecting the door inner panel and the carrier plate.

In a second aspect there is a door module that includes a door inner panel including at least one location slot formed therein. A carrier plate is adapted to engage the door inner panel. The carrier plate includes a recess formed thereon. A trim component is adapted to engage the carrier plate and includes an extension formed thereon. The recess of the carrier plate is disposed within the location slot formed in the door inner panel and the extension engages the recess of the carrier plate for minimizing a tolerance stack up between the door inner panel, carrier plate and trim component.

In a third aspect there is disclosed a door module that includes a carrier plate including at least one access hole formed therein. A side impact member is disposed within the access hole for protecting an occupant of the vehicle during a side impact collision.

### BRIEF DESCRIPTION OF THE DRAWINGS

Figure 1 is a perspective view of a door module including a carrier plate;

Figure 2A and 2B are sectional views of a fastener associated with the door mode in an installed and uninstalled position;

Figure 3 is a sectional view of an alternative fastener associated with the door module;

Figure 4 is partial perspective view of a locator of a carrier plate of the door module positioned relative to a door inner panel and a trim component;

Figure 4A is a section taken through the locator of Figure 4;

Figure 5 is a partial perspective view of a door module;

Figure 5A is a partial perspective view of the door module of Figure 5 including an energy absorbing member;

Figure 6 is a partial perspective view of window regulator of the door module.

### DETAILED DESCRIPTION OF THE PREFERRED EMBODIMENTS

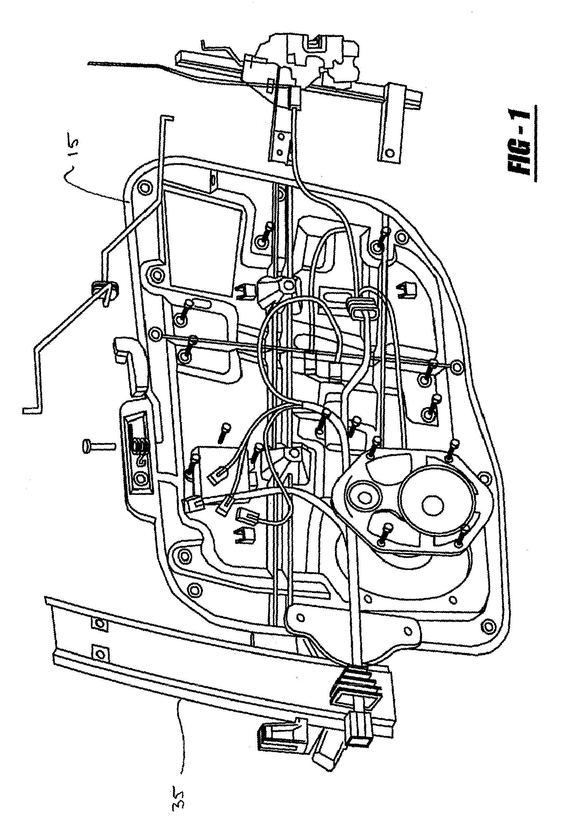

Referring to Figure 1, there is shown part of a door assembly 10 including a door module 15. The door assembly 10 may include a door inner panel 20, the door module 15 including a carrier plate 25, and an interior trim component 30.

The door inner panel 20 may be formed of a sheet metal or other material and is shaped to form an outer skin or surface of a door for a vehicle. The carrier plate 25, as depicted has a shape corresponding to an inner shape of the door inner panel 20 and may be formed of a suitable molded material, such as a fiberglass reinforced plastic material although it may be formed of any material including other plastic resins or metal materials. As can be seen in the figure, the carrier plate 25 includes various contours, attachment points, and slots formed therein for performing various functions and attachments, as will be discussed in more detail below.

The carrier plate 25 is adapted to hold numerous subassemblies that are commonly associated with a door of a vehicle. The carrier plate 25 includes an attachment point for receiving a window rack lift system 35. Additionally, the carrier plate 25 may accommodate other components such as a release handle, speaker, latch presenter, as well as other modules that may be associated with the door of a vehicle.

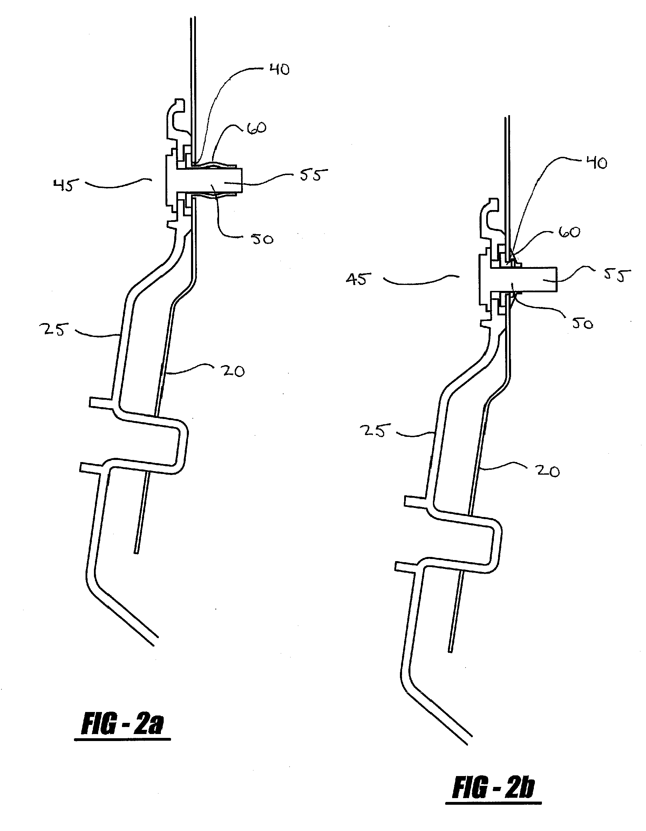

The door inner panel 20 includes at least one fastening feature 40, best seen in Figures 2A and B. The fastening feature 40 may be a hole or slot formed around a periphery of the door inner panel 20 that is adapted to couple with a fastener 45, as will be discussed in more detail below.

In one aspect, the carrier plate 25 includes at least one fastener 45 attached thereto for operatively connecting the door inner panel 20 with the carrier plate 25. The fastener 45 may be received within the at least one fastening feature 40 formed on the door inner panel 20. The fastener 45 is attached to the carrier plate 25 prior to attachment to the door inner panel 20 such that the fasteners 45 are integrated with the carrier plate 25 for quick assembly during a manufacturing operation with the door inner panel 20.

In one aspect, as shown in Figures 2A and 2B, the fastener 45 may be a jack nut 50 and bolt 55 partially rotatably retained within the jack nut 50. The jack nut 50 is fixedly attached to the door inner panel 20 in response to rotation of the bolt 55, bending the jack nut prongs 60 into contact with the door inner panel 20. This design is in contrast to current manufacturing techniques that utilize weld nuts, J-clips or plastic snap-in fasteners that are attached to a door inner panel and then a bolt or stud is used to couple the carrier plate to the door inner panel. The fastener 45 of the carrier plate 25 can allow the attachment of the carrier plate 25 to the door inner panel 20 without the use of additional members described above attached to the door inner panel simplifying an assembly process of a door. Additionally, the jack nut 50 remains attached to the door inner panel 20 after the bolt 55 has been removed or rotated in an opposing direction to the original fastening rotation allowing servicing of the door module 15 and reattachment of the carrier plate 25 in a straightforward and simple manner.

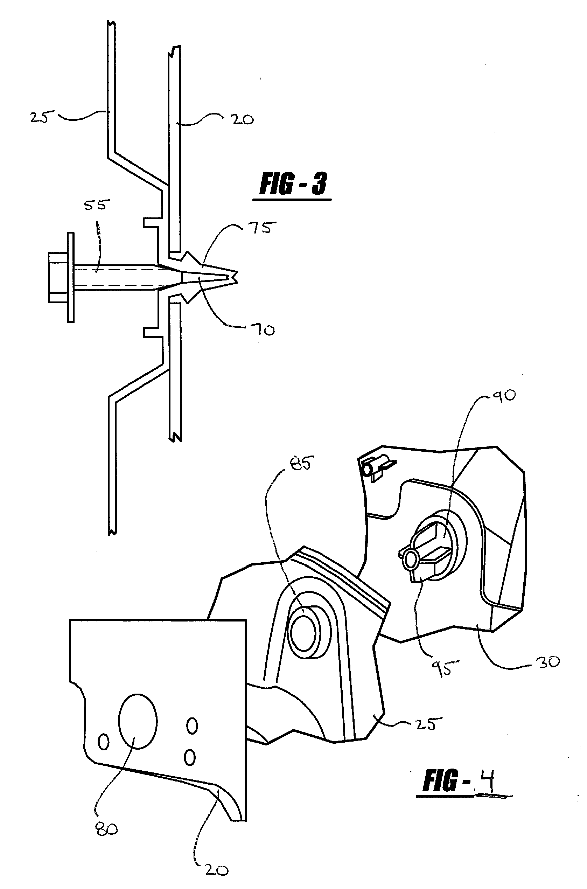

In another aspect, as shown in Figure 3, the fastener 45 may be integrally formed with the carrier plate 25. In this embodiment, the carrier plate 25 includes a slot 70 having legs 75 integrally formed thereon. Again, a bolt 55 is partially rotatably retained in the slot 70 such that the legs 75 that are integrally formed with the carrier plate 25 engage the door inner panel 20 in response to the rotation of the bolt 55.

As can be seen in Figures 2A and 2B, the fastener 45 attached to the carrier plate 25 is positioned within the fastening feature 40 formed in the door inner panel 20, thereby holding the carrier plate 25 in relation to the door inner panel 20. In this manner, the operator who is installing the door module 15 does not need to hold the carrier plate 25 in position while attempting to thread bolts into fasteners or nuts applied to the door inner panel 20, as in prior art applications. Once the fastener 45 is positioned within the fastening feature 40 formed in the door inner panel 20, the bolt 55 may then be rotated in a conventional manner causing the prongs 60 of the jack nut 50 to crimp and engage the door inner panel 20. In this manner, the jack nut 50 is fixedly attached to the door inner panel 20 such that the bolt 55 can be removed during a service operation while the jack nut 50 remains installed on the door inner panel 20. In a similar manner, the integrally formed fastener 45 described above may be attached to the door inner panel 20 utilizing a bolt 55 which, upon rotation, causes the integrally formed legs 75 to flex outward and engage the door inner panel 20. However in the integrally formed embodiment, when the bolt 55 is removed, the integrally formed legs 75 are allowed to flex back to their original starting position such that the carrier plate 25 may be removed for servicing as necessary.

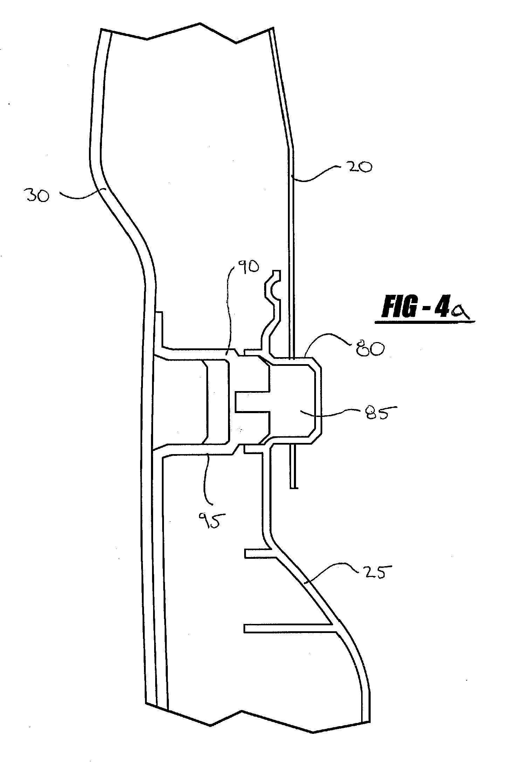

Referring to Figure 4, there is shown partial views of the door inner panel 20, carrier plate 25 and trim component 30 of the door assembly 10. In one aspect, the door inner panel 20 includes at least one location slot 80 formed therein. The carrier plate 25 includes a recess 85 formed thereon. The trim component 30 preferably includes an extension 90 formed thereon. The recess 85 of the carrier plate 25 is disposed within the location slot 80 formed in the door inner panel 20 and the extension 90 engages the recess 80 of the carrier plate 25 for minimizing a tolerance stacked up between the door inner panel 20, carrier plate 25 and trim component 30 when they are coupled. As can be seen in Figure 4, the recess 80 formed on the carrier plate 25 may be sized and shaped such that it engages the extension 90. The extension 90 may include prongs or spring arms 95 that snap within the recess 80 formed on the carrier plate 25 to positively retain the trim component 30 relative to the carrier plate 25. In this manner, location between the trim component 30, the carrier plate 25 and the door inner panel 20 will be located to the door module 15 using a common locator. Such a design minimizes tolerance stack up between the trim component 30 and mating parts such as the release handle, as well as improves the visual appearance of the door in relation to the rest of the vehicle trim.

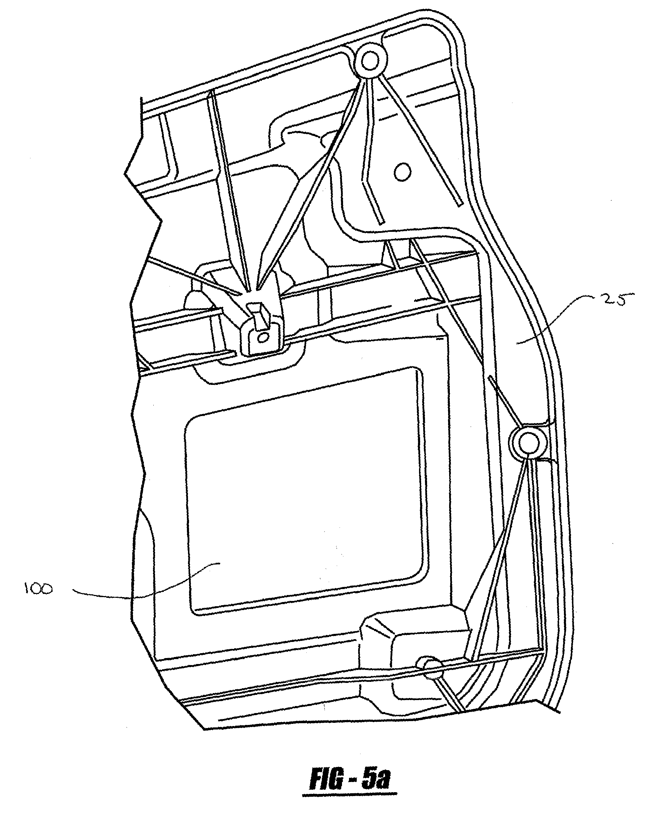

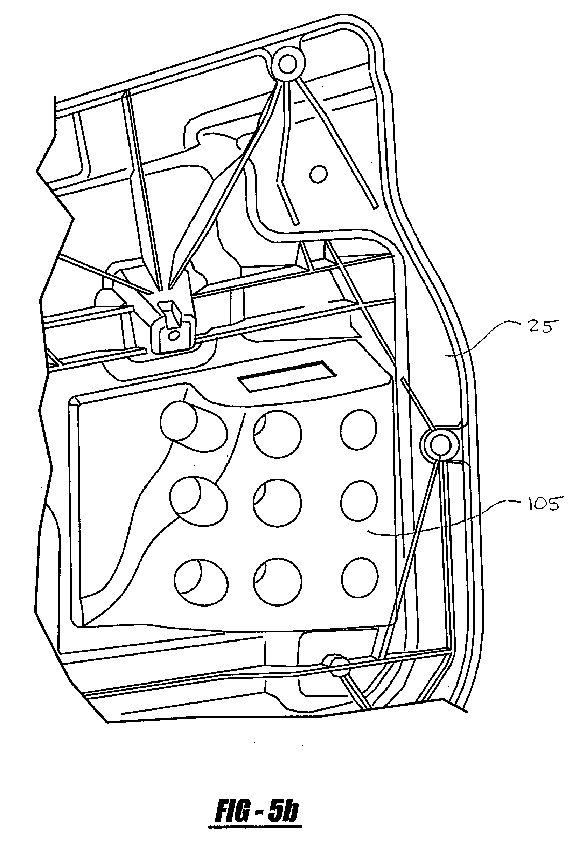

Referring to Figures 5A and 5B, the carrier plate 25 may include an access hole 100 for attaching various subassemblies to the carrier panel 25, after it has been attached to the door inner panel 20. In one aspect, a side impact member 105 is disposed at least partially within the access hole 100 on an inboard side of a window pane disposed within the rack lift 35. The side impact member 105 is preferably formed of a suitable foam material for protecting an occupant of a vehicle during a side impact collision. Additionally, the side impact member 105 may be used to seal the access hole 100 between the two sides of the carrier plate 25. The side impact member 105 may be formed of various materials and can have various shapes and sizes that may be adjusted for different force absorbing and sealing characteristics.

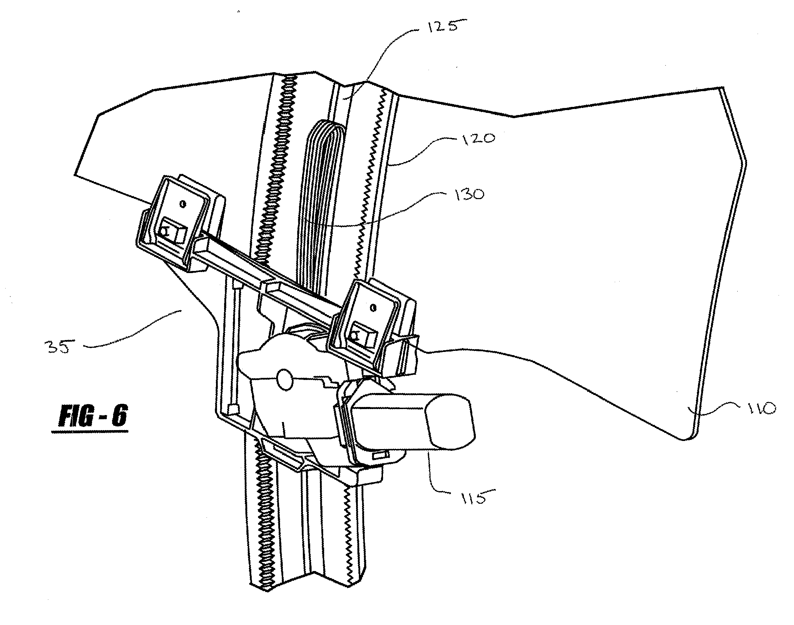

Referring to Figure 6, there is shown the rack lift 35 for moving a window 110 associated with the door module 15. The rack lift 35 is attached to the carrier plate 25 and includes a motor 115 and a travel guide 120. The travel guide 120, in one aspect of the invention includes a recess 125 formed therein. A flexible ribbon wiring harness 130 is attached to the motor 115 and is disposed within the recess 125 formed in the travel guide 120. The flexible ribbon wiring harness 130 travels with the rack lift 35 when moving the window and remains disposed within the recess 125 formed in the travel guide 120 to avoid interference with the rack lift 35. In this manner, bulky circular wiring harnesses commonly utilized with motors that may fatigue or otherwise interfere with operation of the window rack can be eliminated. In one aspect of the invention, the flexible ribbon wiring harness 130 may support multiple conductors with various gauge sizes and have enough slack to allow it to travel through the full range of the window glass 110 associated with the rack lift 35.

The invention has been described in an illustrative manner. It is to be understood that the terminology which has been used is intended to be in the nature of words of description rather than limitation. Many modifications and variations of the invention are possible in light of the above teachings. Therefore, within the scope of the appended claims, the invention may be practiced other than as specifically described.

## Claims

1. A door module for a vehicle comprising:
a carrier plate including at least one access hole formed therein;
a side impact member disposed within the access hole for protecting an occupant of the vehicle during a side impact collision.

2. The door module of claim 1 wherein the side impact member seals the at least one access hole formed in the carrier plate.

3. The door module of claim 1 wherein the carrier plate including at least one access hole formed therein includes at least one fastener attached thereon prior to attachment to the door inner panel, the carrier plate including a recess formed thereon; and further comprising:
a door inner panel including at least one location slot formed therein and at least one fastening feature;
a trim component adapted to engage the carrier plate, the trim panel including an extension formed thereon, the recess of the carrier plate disposed within the location slot formed in the door inner panel and the extension engaging the recess of the carrier plate for minimizing a tolerance stack up between the door inner panel, carrier plate and trim component; and
the fastener coupling with the at least one fastening feature of the door inner panel for operatively connecting the door inner panel and the carrier plate.

4. The door module of claim 3 wherein the fastener couples the carrier plate to the door inner panel without additional members attached to the door inner panel.

5. The door module of Claim 3 wherein the fastener comprises a jack nut and bolt partially rotationally retained in the jack nut, the jack nut fixedly attached to the door inner panel in response to rotation of the bolt; preferably
the jack nut remains attached to the door inner panel after the bolt has been removed allowing servicing of the door module and reattachment of the carrier plate.

6. The door module of Claim 3 wherein the fastener is integrally formed with the carrier plate; preferably
the carrier plate includes a slot having legs integrally formed thereon, and a bolt partially rotationally retained in the slot, the legs attached to the door inner panel in response to rotation of the bolt; more preferably
the legs move out of attachment with the door inner panel after the bolt has been removed allowing servicing of the door module and reattachment of the carrier plate.

7. The door module of claim 3 including a rack lift for moving a window associated with the carrier plate, the rack lift including a motor and a travel guide having a recess formed therein, the motor including a flexible ribbon wiring harness attached to the motor and disposed within the recess formed in the travel guide for movement with the rack lift when moving the window.

8. A door module for a vehicle comprising:
a door inner panel including at least one fastening feature;
a carrier plate including at least one fastener attached thereon prior to attachment to the door inner panel;
the fastener coupling with the at least one fastening feature of the door inner panel for operatively connecting the door inner panel and the carrier plate.

9. The door module of claim 8 wherein the fastener couples the carrier plate to the door inner panel without additional members attached to the door inner panel.

10. The door module of Claim 8 wherein the fastener comprises a jack nut and bolt partially rotationally retained in the jack nut, the jack nut fixedly attached to the door inner panel in response to rotation of the bolt; preferably
the jack nut remains attached to the door inner panel after the bolt has been removed allowing servicing of the door module and reattachment of the carrier plate.

11. The door module of Claim 8 wherein the fastener is integrally formed with the carrier plate; preferably
the legs move out of attachment with the door inner panel after the bolt has been removed allowing servicing of the door module and reattachment of the carrier plate.

12. The door module of claim 8 including a rack lift for moving a window associated with the carrier plate, the rack lift including a motor and a travel guide having a recess formed therein, the motor including a flexible ribbon wiring harness attached to the motor and disposed within the recess formed in the travel guide for movement with the rack lift when moving the window.

13. A door module for a vehicle comprising:
a door inner panel including at least one location slot formed therein;
a carrier plate adapted to engage the door inner panel, the carrier plate including a recess formed thereon and;
a trim component adapted to engage the carrier plate, the trim component including an extension formed thereon;
the recess of the carrier plate disposed within the location slot formed in the door inner panel and the extension engaging the recess of the carrier plate for minimizing a tolerance stack up between the door inner panel, carrier plate and trim component.
